# EUROPÄISCHE PATENTSCHRIFT

(11) **EP 1 285 017 B1**
(45) Veröffentlichungstag und Bekanntmachung des Hinweises auf die Patenterteilung: **31.01.2007**
(21) Anmeldenummer: 01936367.0
(22) Anmeldetag: 16.05.2001
(51) Int. Cl.: C08G 65/30, B01J 39/04

(54) **VERFAHREN ZUR ABTRENNUNG VON ALKALIMETALLIONEN AUS ALKOXYLATEN**
METHOD FOR SEPARATING ALKALI METAL IONS FROM ALKOXYLATES
PROCEDE POUR SEPARER DES IONS METAL ALCALIN CONTENUS DANS DES ALCOXYLATES

(30) Priorität: 17.05.2000 DE 10024313
(43) Veröffentlichungstag der Anmeldung: 26.02.2003
(73) Patentinhaber: BASF Aktiengesellschaft, 67056 Ludwigshafen (DE)
(72) Erfinder: BADER, Joachim, 67240 Bobenheim-Roxheim (DE); BECHTOLSHEIMER, Hans-Heinrich, 67596 Dittelsbach-Hessloch (DE); BRUCKER, Armin, 67433 Neustadt (DE); DOCKNER, Toni, 67149 Meckenheim (DE); IFFLAND, Gabriele, 69115 Heidelberg (DE); KLINK, Hans, 67258 Hessheim (DE); MARTIN, Stefan, 55278 Dolgesheim (DE); MOHR, Jürgen, 67269 Grünstadt (DE); MUGRAUER, Hans-Martin, 67112 Mutterstadt (DE)
(74) Vertreter: Kinzebach, Werner
(86) Internationale Anmeldenummer: PCT/EP2001/005600
(87) Internationale Veröffentlichungsnummer: WO 2001/088016

(56) Entgegenhaltungen:
- EP-A- 0 376 157
- GB-A- 835 553
- GB-A- 2 135 322
- US-A- 4 994 627
- US-A- 5 182 025

## Beschreibung

Die vorliegende Erfindung betrifft ein Verfahren zur Abtrennung von Alkalimetallionen aus Alkalimetallionen enthaltenden Alkoxylaten, alkalimetallfreie Alkoxylate und ein Verfahren zur Herstellung alkalimetallfreier Alkoxylate.

Alkoxylate, insbesondere Polyalkylenoxide und Addukte von Alkylenoxiden an Alkohole und/oder Alkylphenole, werden üblicherweise unter Alkalimetallhydroxid-Katalyse hergestellt. Je nach Verwendungszweck ist es häufig erforderlich, den Katalysator möglichst vollständig aus dem Addukt zu entfernen. Dies ist beispielsweise bei Alkoxylaten der Fall, die als Kraftstoffadditive oder sogenannte Trägeröle in Kraftstoffaddditivpaketen bzw. Formulierungen eingesetzt werden. Derartige Trägeröle-Alkoxylate sind im Allgemeinen Addukte von Propylenoxid und/oder Butylenoxid an Alkohole und/oder Alkylphenole mit mehr als 6 Kohlenstoffatomen, die durch Katalyse mit Kaliumhydroxid hergestellt werden. Um eine weitgehend rückstandsfreie Verbrennbarkeit der Trägeröle zu gewährleisten, muss der Katalysator abgetrennt werden. Bei den gängigen Verfahren geschieht dies durch Neutralisation und Fällen als saures Kaliumphosphat und anschließende Filtration. Nach der Synthese der Alkoxylate, hier allgemein auch als Polyether bezeichnet, ist es daher erforderlich, das in dem Produkt enthaltene Kaliumalkoholat mit verdünnter Phosphorsäure (stöchiometrische Mengen Phosphorsäure in ca. 10 % des Reaktorinhalts an Wasser gelöst) zu neutralisieren und das Wasser zur Kristallisation des sauren Kaliumphosphats abzudestillieren. Anschließend muss der Reaktorinhalt filtriert werden, z. B. über einen diskontinuierlichen Schichtenfilter, der manuell belegt und ausgeräumt wird. Weitere erforderliche Schritte sind die Trennung und separate Verpackung von produktfeuchtem Salz und getränkten Filterschichten, deren Transport und Verbrennung; die Reinigung der Reaktoren vor dem Folgeansatz, auch bei Batchfahrweise, um verbliebene Phosphatreste, die merkliche Katalysatormengen neutralisieren und so ein Anspringen der Oxalkylierungsreaktion verzögern oder sogar unterbinden können, zu entfernen; die Trocknung der Reaktoren für den Folgeansatz. Es ist ersichtlich, dass die Abtrennung des Katalysators aufwendig ist. Zudem enthalten die so erhaltenen Trägeröle noch kleine Kaliummengen und außerdem Phosphor, so dass keine rückstandslose Verbrennbarkeit der Trägeröle möglich ist.

Aufgabe der vorliegenden Erfindung ist es daher, Alkoxylate bereitzustellen, die im Wesentlichen frei von herstellungsbedingten Katalysatorbeimengungen sind.

Aufgabe der Erfindung ist es außerdem, ein Verfahren zur Herstellung von Alkoxylaten bereitzustellen, die im Wesentlichen frei von herstellungsbedingten Katalysatorbeimengungen sind.

Aufgabe der vorliegenden Erfindung ist es ferner, ein Verfahren zur Abtrennung des Katalysators aus Alkoxylaten bereitzustellen, das eine weitgehende Entfernung des Katalysators aus dem Produkt ermöglicht und dabei bevorzugt eine Belastung des Produkts mit Phosphat vermeidet.

Die Aufgabe wird gelöst durch das erfindungsgemäße Verfahren zur Abtrennung von Alkalimetallionen aus Alkalimetallionen (insbesondere Kalium- und Natriumionen) enthaltenden Alkoxylaten, das die Schritte des Anspruchs 1 aufweist.

Bei dem erfindungsgemäßen Verfahren zur Herstellung von Alkoxylaten werden die Alkoxylate zunächst in konventioneller Weise hergestellt, und anschließend wird der Katalysator nach dem erfindungsgemäßen Verfahren zur Abtrennung von Alkalimetall entfernt.

Der Begriff "alkalimetallfrei" bzw. "im Wesentlichen alkalimetallfrei" bedeutet, dass weniger als 5 ppm, bevorzugt weniger als 1 ppm, Alkalimetallionen enthalten sind. Das zu reinigende, alkalimetallhaltige Alkoxylat enthält im Allgemeinen 5000 ppm bis 100 ppm Alkalimetallionen, insbesondere 2000 bis 1000 ppm.

Der Ausdruck "im Wesentlichen lösungsmittelfrei" bedeutet, dass das Alkoxylat < 1000 ppm, vorzugsweise < 500 ppm, Lösungsmittel enthält.

Der Begriff "Alkoxylat" umfasst Reinsubstanzen als auch Gemische, die unter Verwendung verschiedener Alkylenoxide und/oder verschiedener Alkohole erhalten wurden.

Der Begriff "Alkoxylat" umfasst Polyalkylenoxide (Polyether) sowie Alkohol- und/oder Alkylphenol-gestartete Polyether. Die Polyether bzw. der Polyetherteil der Alkohol- und Alkylphenol-gestarteten Polyether ist im Allgemeinen aufgebaut aus mindestens einem C₂-C₆-Alkylenoxid, insbesondere Ethylenoxid, Propylenoxid, n-Butylenoxid, 2,3-Butylenoxid und/oder i-Butylenoxid. Als Alkohol verwendet man im Allgemeinen mindestens ein C₁-C₅₀-Alkanol, vorzugsweise C₂-C₂₀-Alkanol, besonders bevorzugt ein C₆-C₁₄-Alkanol, insbesondere 2-Ethylhexanol, Nonanol, Isononanol, Tridecanol, Isotridecanol etc. Als Alkylphenol verwendet man im Allgemeinen ein C₁-C₅₀-Alkylphenol, besonders bevorzugt ein C₆-C₁₄-Alkylphenol, vorzugsweise C₆-C₁₄-Alkylphenol, insbesondere Nonylphenol, Octylphenol , Dodecylphenol sowie Di-C₁-C₅₀-alkylphenole.

Bevorzugt sind Alkanol-gestartete Polyether mit etwa 10 bis 35, vorzugsweise etwa 15 bis 30 Alkylenoxideinheiten.

Die Herstellung von Alkoxylaten ist an sich bekannt. Polyethersynthesen sind beispielsweise beschrieben in Ullmann's Encyclopedia of Industrial Chemistry, 5th Edition, Vol. 21, 1992, 579-589 und den darin genannten Druckschriften. Die Herstellung von Alkohol- oder Alkylphenol-gestarteten Polyethern ist beispielsweise beschrieben in Ullmanns Enzyklopädie der technischen Chemie, 4. Aufl., Band 22, 491-492; Band 19, 31-33.

Das katalysatorhaltige Alkoxylat-Rohprodukt wird zur Entfernung des Katalysators zunächst mit einem inerten Lösungsmittel verdünnt. Als Lösungsmittel verwendet man im Allgemeinen einen aliphatischen oder cyclischen Ether, wie t-Butylmethylether, Tetrahydrofuran oder Dioxan, einen Kohlenwasserstoff, wie Pentan, Hexan, Toluol oder Xylol, ein Keton, wie Aceton oder Methylethylketon, und vorzugsweise einen Alkohol, insbesondere ein C₁-C₄-Alkanol, wie Ethanol, Isopropanol, n-Butanol, iso-Butanol und bevorzugt Methanol. Die verdünnte Lösung wird zur Entfernung des Alkalimetall-Katalysators mit einem Kationenaustauscher behandelt, zum Beispiel durch ein Austauscherbett, insbesondere in Form einer Säule, geleitet oder mit dem Kationenaustauscher ausgerührt. Als Kationenaustauscher geeignet sind insbesondere stark saure, makroporöse Harze, wie z. B. solche auf Basis vernetzter Polystyrole mit Sulfonsäureestern als funktionelle Gruppen.

Die zur Katalysatorentfernung erforderliche Menge an Kationenaustauscher ergibt sich aus dem Katalysatorgehalt des zu behandelnden Produktes und der Kapazität des verwendeten Ionenaustauschers.

Anschließend wird das Lösungsmittel wieder entfernt, z. B. durch Abdestillieren. Die Entfernung erfolgt bevorzugt in zwei Schritten. In einem ersten Schritt wird die Hauptmenge des Lösungsmittels entfernt, bevorzugt durch Abdestillieren, wobei eine an Lösungsmittel abgereicherte Lösung des Alkoxylats sowie das Lösungsmittel erhalten wird. In dem ersten Schritt werden bevorzugt mindestens 80 % und bis zu 95 % des Lösungsmittels entfernt. In einem zweiten Schritt wird die Restmenge des Lösungsmittels, bevorzugt durch Strippen der abgereicherten Lösung des Alkoxylats mit Inertgas in einer Kolonne, entfernt, um ein im Wesentlichen alkalimetallfreies und im Wesentlichen lösungsmittelfreies Alkoxylat sowie Alkohol zu erhalten.

Nach einer bestimmten Betriebsdauer bedarf der Kationenaustauscher einer Regenerierung. Die Regenerierung wird bevorzugt in das Gesamtverfahren integriert, d. h., vor der Regenerierung noch im Kationenaustauscher enthaltene Alkoxylatlösung wird gewonnen und in das Katalysatorabtrennverfahren in Stufe c) oder a) zurückgeführt. Am Kationenaustauscher gegebenenfalls noch anhaftende Reste der Alkoxylatlösung werden durch Waschen mit dem inerten Lösungsmittel entfernt. Das Waschlösungsmittel wird ebenfalls in Stufe a) des Katalysatorabtrennverfahrens zurückgeführt.

Das Regenerieren des Kationenaustauschers umfasst bevorzugt folgende Schritte:
d1) Entfernung der Alkoxylatlösung aus dem Kationenaustauscher und gegebenenfalls Auswaschen des Kationenaustauschers mit dem inerten Lösungsmittel. Das kann so erfolgen, dass die Alkoxylatlösung z. B. durch Ablassen entfernt und der Kationenaustauscher anschließend mit dem Lösungsmittel gewaschen wird. Alternativ kann das Lösungsmittel ohne vorherige Entfernung der Alkoxylatlösung zugeführt werden, bis das Alkoxylat ausgespült ist. In Schritt d1 die Alkoxylatlösung wird aus dem Kationenaustaucher entfernt, indem man sie mit einem Inertgas aus diesem drückt.
d2) gegebenenfalls Auswaschen des Kationenaustauschers mit entsalztem Wasser,
d3) Regenerieren des Kationenaustauscherharzes mit einer Säure, bevorzugt Schwefelsäure,
d4) Neutralwaschen des Kationenaustauscherharzes mit entsalztem Wasser,
d5) Auswaschen des im Ionenaustauscherharz befindlichen Wassers mit einem inerten Lösungsmittel, vorzugsweise einem mit Wasser mischbaren inerten Lösungsmittel, und
d6) gegebenenfalls Beschicken des Kationenaustauschers mit dem für die Behandlung mit dem Kationenaustauscher gewünschten inerten Lösungsmittel.

Das bei der Regenerierung des Kationenaustauschers verwendete inerte Lösungsmittel ist bevorzugt dasselbe, das auch bei dem Katalysatorabtrennverfahren verwendet wird. Schritt d6) entfällt dann.

Bevorzugt werden die Alkoxylat-Addukte nach der Synthese, also vor Schritt a) des erfindungsgemäßen Verfahrens, mit Wasserdampf oder einem Inertgas, wie Stickstoff, gestrippt.

Die vorliegende Erfindung ist mit besonderem Vorteil anwendbar zur Abtrennung von Kaliumionen aus Addukten von Ethylenoxid und/oder Propylenoxid und/oder Butylenoxid, insbesondere Propylenoxid und/oder Butylenoxid, an C₆-C₁₄-Alkohole und/oder C₆-C₁₄-Alkylphenole, wobei als inertes Lösungsmittel bevorzugt ein C₁-C₄-Alkanol, insbesondere Methanol, verwendet wird.

Im Folgenden wird eine bevorzugte Ausführungsform der Erfindung beschrieben. Die dabei angegebenen Lösungsmittel/Verdünnungsmittel-Mengen und Temperaturbereiche sind bevorzugte Werte für die Abtrennung von Kalium aus Propylenoxid/Butylenoxid-Addukten unter Verwendung von Methanol als Verdünnungsmittel. Sie können bei anderen Addukten, Katalysatoren und Lösungsmitteln abweichende Werte annehmen, wobei die optimalen Werte jedoch vom Fachmann routinemäßig ohne Weiteres zu ermitteln sind.

Zum Verdünnen des kaliumhaltigen Addukts (Schritt a) werden dem Addukt bevorzugt 5 bis 25 % (m/m), besonders bevorzugt etwa 15 % (m/m) Methanol zugesetzt. Anschließend wird die methanolische Lösung mit einem Kationenaustauscher behandelt, z. B. über ein Ionentauscherbett geführt, das einen Kationenaustauscher enthält. Es kann ein handelsübliches Ionenaustauscherharz, bevorzugt in gekörnter Form, eingesetzt werden. In Frage kommen z. B. die oben genannten Kationenaustauscher, z. B. Lewatit SP 120 (Bayer), Amberlite 252 C (Rohm und Haas).

Die Standzeit des Kationenaustauschers beträgt im Allgemeinen 1 Jahr oder länger. Beim Passieren des Ionentauschers hat die methanolische Lösung bevorzugt eine Temperatur im Bereich von ca. 20 bis 60 °C, besonders bevorzugt etwa 50 °C. Der Kationenaustauscher liegt in der sauren Form vor. Beim Durchgang der kaliumhaltigen methanolischen Lösung des Addukts bindet er Kaliumionen und gibt Protonen ab nach folgendem Schema:

R-O-(CHR'-CHR"-O)ₓ-K+ + IOTH+ ↦ R-O-(CHR'-CHR"-O)ₓ-H+ + IOTK+

IOT = Ionenaustauscher
R = Alkyl oder Alkylaryl
R'=R"= H, CH₃, C₂H₅

Nach der Behandlung mit dem Kationentauscher ist die methanolische Addukt-Lösung stark an Kalium verarmt, insbesondere im Wesentlichen kaliumfrei, und besonders bevorzugt beträgt die Konzentration an Kaliumionen höchstens 1 ppm.

Zur Abtrennung möglicher Feinanteile des Ionentauscherharzes wird die Lösung anschließend in üblicher Weise filtriert. Vor der weiteren Behandlung kann sie in einem Behälter zwischengelagert werden.

Es empfiehlt sich, den Kaliumgehalt der den Ionentauscher verlassenden Addukt-Lösung ständig oder zumindest in regelmäßigen Abständen mittels analytischer Messung zu überwachen. Beim Durchbruch von Kaliumionen muss der Austauscher regeneriert werden. Dies geschieht mittels einer Säure, bevorzugt Schwefelsäure, besonders bevorzugt ca. 5%iger Schwefelsäure, nach folgender Vorgehensweise:

Zunächst wird der Zustrom der kaliumhaltigen methanolischen Lösung des Addukts zu dem Ionentauscher unterbrochen. Anschließend kann Methanol zugeführt werden, um den Ionentauscher produktfrei zu waschen. Dabei erhält man addukthaltiges Methanol, das wiederum zum Verdünnen des Rohprodukts, d. h. des katalysatorhaltigen Alkoxylats, verwendet wird. Bevorzugt wird jedoch vor dem Waschen mit Methanol die sich noch in dem Ionentauscher befindende kaliumfreie Addukt-Lösung mit Stickstoff oder einem anderen Inertgas aus dem Ionentauscher gedrückt und zur Weiterbehandlung mit der übrigen kaliumfreien Addukt-Lösung vereinigt. Anschließend wird der Ionentauscher mit Methanol produktfrei gewaschen und das den Ionentauscher verlassende, eine geringe Menge Addukt enthaltende Waschmethanol wird zum Verdünnen des kaliumhaltigen Rohprodukts verwendet. Vorzugsweise wird auch das Wasch- oder Spülmethanol vor der Weiterverwendung zur Abtrennung möglicher Feinteile des Austauscherharzes filtriert.

Der kaliumbeladene Ionentauscher ist nunmehr mit Methanol gefüllt, welches vor der Regenerierung entfernt werden muss. Eine Möglichkeit ist, den Ionentauscher im Gegenstrom oder im Gleichstrom mit vollentsalztem Wasser zu spülen. Das hierbei anfallende, methanolhaltige Abwasser wird nicht weiterverwendet, sondern über eine Kläranlage entsorgt. Zur Vermeidung größerer Verluste an Methanol ist es jedoch bevorzugt, vor dem Spülen des Ionentauschers mit vollentsalztem Wasser das Methanol zu entfernen, z. B. mit einem Inertgas, wie Stickstoff, aus dem Ionentauscher zu drücken. Dieses Methanol wird vorzugsweise mit dem übrigen, addukthaltigen Spülmethanol vereinigt und wieder zur Verdünnung von Folgeansätzen kaliumhaltiger Addukte verwendet.

Der Ionentauscher wird nunmehr mittels Durchleiten von verdünnter Schwefelsäure (1 bis 20 Gew.-%), bevorzugt ca. 5%iger Schwefelsäure, im Gegenstrom wieder in die saure Form überführt. Anschließend wird mit vollentsalztem Wasser neutralgewaschen und das Wasser schließlich mit Methanol ausgewaschen, bevorzugt in Rieselbettfahrweise. Die dabei anfallende wässrige Methanolphase kann anstelle von frischem Methanol zur Vorreinigung von Reaktoren bei Produktwechsel verwendet werden.

Nach vollständiger Verdrängung des Wassers gegen Methanol ist der Ionentauscher wieder betriebsbereit und kann erneut beschickt werden.

Die den Ionentauscher verlassende, im Wesentlichen kaliumfreie Addukt-Lösung wird folgendermaßen weiterbehandelt:

Aus anwendungstechnischen Gründen muss die Lösung möglichst vollständig vom Lösungsmittel befreit werden. Dies wird vorzugsweise in einer insbesondere einstufigen Verdampferanlage mit angeschlossener Strippkolonne durchgeführt. Ein bevorzugter Temperaturbereich ist ca. 150 bis 170 °C, besonders bevorzugt 160 °C. Zunächst wird die Hauptmenge des Methanols, vorzugsweise mindestens 80 %, durch Destillation abgetrennt. Das zurückgewonnene Methanol kann gesammelt und wiederverwendet werden.

Zur Entfernung des restlichen Methanols aus der Addukt-Lösung wird insbesondere eine Inertgas-Strippkolonne verwendet, in der auf Methanolgehalte von weniger als 1 000 ppm, bevorzugt weniger als 500 ppm, abgereichert wird. Das Inertgas ist vorzugsweise Stickstoff.

Auch das in der Strippkolonne abgestrippte Methanol kann wiederverwendet werden. Die die Strippkolonne verlassenden, im Wesentlichen kaliumfreien, methanolarmen Wertprodukte werden vorzugsweise durch einen Wärmetauscher geleitet, wobei sie die kaliumarme Addukt-Lösung vor dem Eintritt in die Verdampfervorrichtung vorwärmen und dabei selbst auf ca. 50 bis 60 °C abgekühlt werden.

Das erfindungsgemäße Verfahren enthält mehrere Verfahrensschritte, bei denen reines Methanol benötigt wird, nämlich beim Produktfreiwaschen des Ionenaustauschers, beim Auswaschen des Wassers aus dem Ionentauscher und Füllen des Ionentauschers mit Methanol nach der Regenerierung sowie gegebenenfalls zum Verdünnen des Rohprodukts vor der Abtrennung des Kaliums im Ionentauscher. Dafür wird vorzugsweise das abdestillierte und abgestrippte Methanol wiederverwendet. Zum Verdünnen des kaliumhaltigen Rohprodukts wird vorzugsweise zusätzlich oder ausschließlich addukthaltiges Methanol vom Auswaschen des Ionentauschers wiederverwendet.

In den Zeichnungen zeigen:
- Fig.1: ein Fließbild einer Ionenaustauscheranlage, wie sie zur Durchführung des erfindungsgemäßen Verfahrens verwendet wird,
- Fig. 2: ein Fließbild einer der Ionenaustauscheranlage nachgeschalteten Verdampferanlage zur Abtrennung des Verdünnungsmittels Methanol.

Die Erfindung wird nun anhand einer besonders bevorzugten Ausführungsform unter Bezugnahme auf die Figuren detailliert beschrieben.

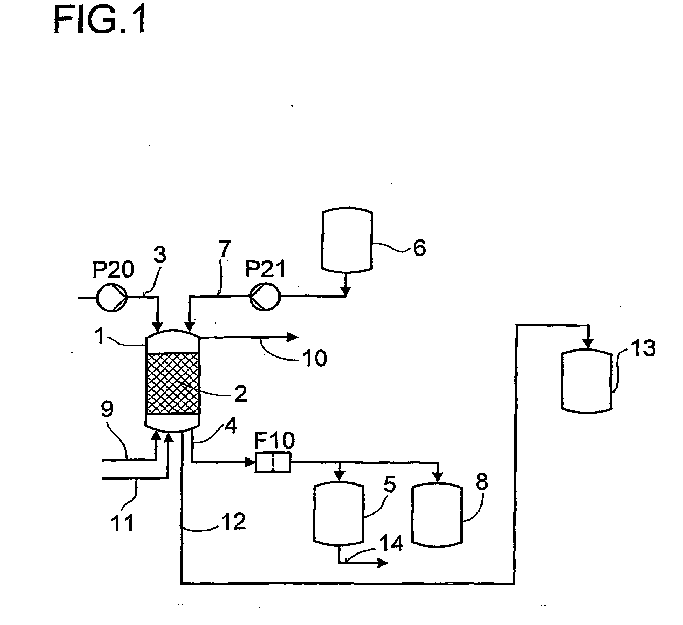

Wie aus Fig. 1 ersichtlich ist, werden die rohen, kaliumhaltigen, methanolverdünnten Alkoxylate (Butylenoxid-Addukt an Isotridecanol) über die Leitung 3 mittels der Pumpe P20 über ein Kationenaustauscherbett 2 im Behälter 1 gefördert. In dem Behälter ist das Ionenaustauscherharz zwischen zwei Siebplatten eingebaut. Der Ionenaustauscher liegt zu Beginn in saurer Form vor und bindet Kaliumionen unter Abgabe von Protonen. Die Verdünnung der Alkoxylate mit Methanol ist erforderlich, um einen weitgehend vollständigen Kationenaustausch zu erzielen. Die in den Behälter 1 eintretenden methanolverdünnten Alkoxylate haben eine Temperatur von ca. 50 °C.

Die aus dem Behälter 1 über Leitung 4 austretende Alkoxylatlösung ist im Wesentlichen kaliumfrei. Sie passiert den Filter F10 zur Abtrennung möglicher Feinanteile des Austauscherharzes und wird danach in dem Behälter 5 zwischengelagert.

Durch eine analytische Messung wird der den Behälter 1 verlassende Alkoxylatstrom ständig auf Kaliumfreiheit überwacht. Beim Durchbruch von Kaliumionen muss der Austauscher regeneriert werden. Dies geschieht mit ca. 5%iger Schwefelsäure nach folgender Vorgehensweise:

Der Zustrom des rohen Alkoxylats zum Behälter 1 wird unterbrochen; anschließend wird das noch im Austauscherbehälter verbliebene, methanolverdünnte Alkoxylat mit Stickstoff in den Behälter 5 gedrückt. Der Ionenaustauscher im Behälter 1 wird nun mit Methanol, das aus dem Behälter 6 über Leitung 7 mit der Pumpe P21 gefördert wird, produktfrei gewaschen; der Behälter 1 wird danach wieder mit Stickstoff leer gedrückt. Das hierbei anfallende, alkoxylathaltige Spülmethanol gelangt über den Filter F10 in den Behälter 8 und wird wieder zur Verdünnung von Folgeansätzen der rohen Alkoxylate in den Reaktoren der Syntheseanlage eingesetzt.

Nach der Verdrängung des Alkoxylats im Ionenaustauscher durch Methanol wird der Behälter 1 möglichst vollständig in den Behälter 8 entleert und danach wird das Ionenaustauscherharz im Gegenstrom mit vollentsalztem Wasser, das über Leitung 9 zugeführt wird, gespült. Das hierbei anfallende, in den ersten Fraktionen noch methanolhaltige Abwasser wird über Leitung 10 entsorgt.

Nachdem in dem Behälter 1 eine reine Wasserphase vorliegt, erfolgt die Regenerierung des beladenen Ionenaustauscherharzes durch Durchleiten von ca. 5%iger Schwefelsäure im Gegenstrom über Leitung 11. Dabei wird der Ionenaustauscher wieder in die saure Form überführt und den Behälter 1 verlässt eine verdünnte Lösung von Kaliumsulfat, Kaliumhydrogensulfat und Schwefelsäure, die über Leitung 10 entsorgt wird.

Nach vollständiger Regenerierung wird die Ionenaustauscherfüllung mit vollentsalztem Wasser über Leitung 9 säurefrei gewaschen, anschließend wird der Behälter 1 wieder möglichst vollständig entleert und danach wird restliches Wasser mit Methanol verdrängt. Das hierzu nötige Methanol wird mittels der Pumpe P21 aus dem Behälter 6 gefördert.

Die in diesem Verfahrensschritt anfallenden wässrigen Methanolphasen werden über Leitung 12 in den Behälter 13 überführt und zwischengelagert und bei der Synthese der Alkoxylate anstelle von frischem Methanol zur Vorreinigung von Reaktoren bei Produktwechsel verwendet.

Nach vollständiger Verdrängung des Wassers gegen Methanol ist der Ionenaustauscher im Behälter 1 wieder betriebsbereit und kann wieder über die Pumpe P20 mit methanolischen Alkoxylatlösungen beschickt werden.

Die im Behälter 5 zwischengelagerten methanolhaltigen und im Wesentlichen kaliumfreien Alkoxylate werden dann möglichst vollständig vom Lösungsmittel befreit.

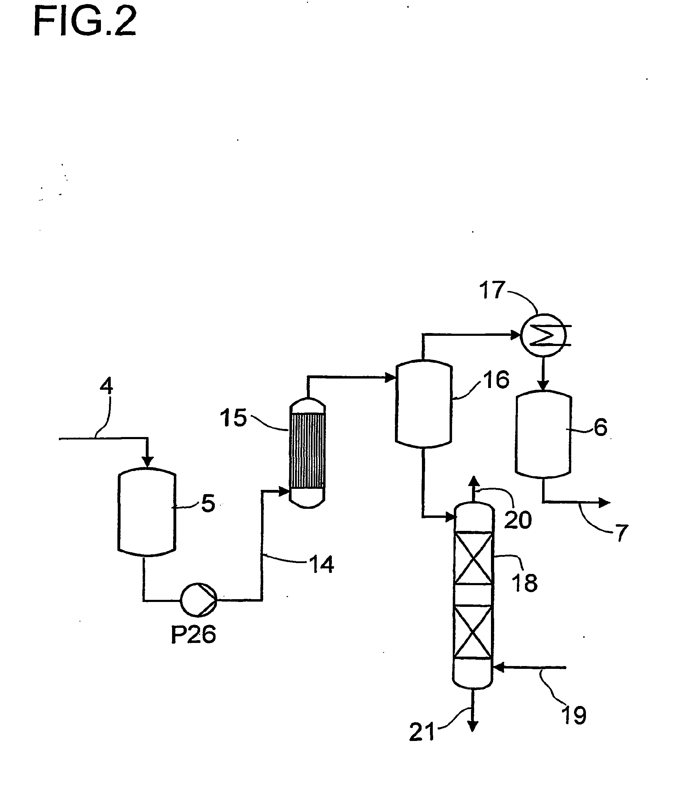

Dies geschieht in einer nachgeschalteten einstufigen Verdampferanlage mit anschließender Stickstoffstrippkolonne bei ca. 160 °C (Fig. 2):

Im Wesentlichen kaliumfreie Alkoxylatlösung wird aus dem Behälter 5 mit der Pumpe P26 über Leitung 14 in den Umlaufverdampfer 15 gefahren, dem die Verdampferblase 16 zugeordnet ist. Es erfolgt eine teilweise Abtrennung des Methanols, indem der Brüden der Verdampferblase 16 in dem Kondensator 17 verflüssigt und im Methanolbehälter 6 gesammelt wird.

Aus der Verdampferblase 16 wird das an Methanol abgereicherte, ca. 160 °C heiße Alkoxylat auf den Kopf der Kolonne 18 gegeben und mit Stickstoff, der über Leitung 19 zugeführt wird, im Gegenstrom gestrippt.

Das die Kolonne 18 über Leitung 20 verlassende Abgas wird nach Abscheiden kondensierbarer Anteile (Methanol), die ebenfalls im Behälter 6 gesammelt werden, entsorgt.

Aus dem Kolonnensumpf wird über Leitung 21 im Wesentlichen methanolfreies Alkoxylat abgezogen und der Verwendung zugeführt bzw. gelagert.

Das erfindungsgemäße Ionenaustauscherverfahren weist gegenüber dem Phosphat-Fällungsverfahren des Standes der Technik folgende Vorteile auf:

Nach der Synthese der Alkylenoxid-Addukte an Alkohole durch Katalyse mit Kaliumhydroxid entfallen eine Reihe von Verfahrensschritten:
- Neutralisation des Kaliumalkoholats mit verdünnter Phosphorsäure und Abdestillieren des Wassers zur Kristallisation des sauren Kaliumphosphats,
- Filtration des Reaktorinhalts über einen diskontinuierlichen Schichtenfilter, der manuell belegt und ausgeräumt wird,
- Trennung und separate Verpackung von produktfeuchtem Salz und getränkten Filterschichten und Transport zur Rückstandsverbrennung,
- Reinigung der Reaktoren vor dem Folgeansatz, auch bei Batchfahrweise, um verbliebene Phosphatreste, die merkliche Katalysatormengen neutralisieren und so ein Anspringen der Oxalkylierungsreaktion verzögern bzw. unterbinden können, zu entfernen,
- Trocknung der Reaktoren für den Folgeansatz, beim erfindungsgemäßen Verfahren kombiniert mit der Katalysatorherstellung dieser Partie.

Das erfindungsgemäße Verfahren ermöglicht eine ökonomische und umweltfreundliche Reinigung von Alkoxylaten, insbesondere von sogenannten Träger-ölen, und führt zu Produkten hoher Qualität. Durch das erfindungsgemäße Ionenaustauschverfahren werden Trägeröle erhalten, die rückstandsfrei in den Motoren verbrennen und keine zusätzlichen Fremdstoffe immittieren. Darüber hinaus ermöglicht das erfindungsgemäße Verfahren eine Kapazitätserhöhung, die im Wesentlichen darauf zurückzuführen ist, dass die Reaktoren ausschließlich für den Syntheseprozess der Alkylenoxid-Addukte zur Verfügung stehen.

## Patentansprüche

1. Verfahren zur Abtrennung von Alkalimetallionen aus Alkalimetallionen enthaltenden Alkoxylaten, umfassend:
a) Verdünnen des alkalimetallhaltigen Alkoxylats mit einem inerten Lösungsmittel,
b) Behandeln der alkalimetallhaltigen Lösung des Alkoxylats mit einem Kationenaustauscher, um eine weniger als 5ppm Alkalimetallionen enthaltende Lösung, des Alkoxylats zu erhalten,
c) Entfernen des Lösungsmittels aus der im Wesentlichen alkalimetallfreien Lösung des Alkoxylats, um ein weniger als 5 ppm Alkalimetallionen und weniger als 1000 ppm Lösungmittel enthaltendes, at zu erhalten,
wobei das Verfahren ein Regenerieren des Kationenaustauschers beinhaltet und das Regenerieren folgende Schritte umfasst:
d1) Entfernung der Alkoxylatlösung aus dem Kationenaustauscher und Auswaschen des Kationenaustauschers mit dem inerten Lösungsmittel,
d2) gegebenenfalls Auswaschen des Kationenaustauschers mit entsalztem Wasser,
d3) Regenerieren des Kationenaustauscherharzes mit einer Säure,
d4) Neutralwaschen des Kationenaustauscherharzes mit entsalztem Wasser,
d5) Auswaschen des im Ionenaustauscherharz befindlichen Wassers mit einem inerten Lösungsmittel, und
d6) gegebenenfalls Beschicken des Kationenaustauschers mit dem für die Behandlung mit dem Kationenaustauscher gewünschten inerten Lösungsmittel,
wobei in Schritt d1) die Alkoxylatlösung aus dem Kationenaustauscher entfernt wird, indem man sie mit einem Inertgas aus diesem drückt.

2. Verfahren nach Anspruch 1, **dadurch gekennzeichnet, dass** das Entfernen des Lösungsmittels in zwei Schritten erfolgt, wobei zuerst
c1) die Hauptmenge des Lösungsmittels entfernt wird, um eine an Lösungsmittel abgereicherte Lösung des Alkoxylats zu erhalten, und dann
c2) die Restmenge des Lösungsmittel aus der an Lösungsmittel abgereicherten Lösung des Alkoxylats entfernt wird, um eine weniger als 5ppm Alkalimetallionen und weniger als 1000ppm Lösungsmittel enthaltendes.

3. Verfahren nach Anspruch 2, **dadurch gekennzeichnet, dass** das Lösungsmittel in Schritt c1) abdestilliert und/oder die Restmenge des Lösungsmittels in Schritt c2) durch Strippen mit Inertgas entfernt wird.

4. Verfahren nach einem der Ansprüche 1 bis 3, **dadurch gekennzeichnet, dass** das Alkoxylat ein Addukt von Ethylenoxid und/oder Propylenoxid und/oder Butylenoxid an mindestens ein C₁-C₅₀-Alkanol und/oder mindestens ein (C₁-C₅₀-Alkyl)phenol ist.

5. Verfahren nach einem der Ansprüche 1 bis 4, **dadurch gekennzeichnet, dass** die abzutrennenden Alkalimetallionen Kaliumionen sind.

6. verfahren nach einem der Ansprüche 1 bis 5, **dadurch gekennzeichnet, dass** das zum Verdünnen des Alkoxylats und/oder beim Regenerieren des Kationenaustauschers verwendete Lösungsmittel ein C₁-C₄-Alkylalkohol, bevorzugt Methanol, ist.

7. Verfahren nach einem der Ansprüche 1 bis 6, **dadurch gekennzeichnet, dass** in Schritt b) eine Alkoxylatlösung mit einem Alkalimetallgehalt von nicht mehr als 1 ppm erhalten wird.

## Claims

1. A process for separating alkali metal ions from alkoxylates containing alkali metal ions, comprising:
a) dilution of the alkali metal-containing alkoxylate with an inert solvent,
b) treatment of the alkali metal-containing solution of the alkoxylate with a cation exchanger in order to obtain a solution of the alkoxylate comprising less than 5 ppm of alkali metal ions, and
c) removal of the solvent from the substantially alkali metal-free solution of the alkoxylate in order to obtain an alkoxylate comprising less than 5 ppm of alkali metal ions and less than 1000 ppm of solvent, the process including a regeneration of the cation exchanger, the regeneration comprising the following steps:
d1) removal of the alkoxylate solution from the cation exchanger and washing out the cation exchanger with an inert solvent,
d2) if appropriate, washing out the cation exchanger with demineralized water,
d3) regeneration of the cation exchange resin with an acid,
d4) washing the cation exchange resin neutral with demineralized water,
d5) washing out the water present in the ion exchange resin with an inert solvent and
d6) if appropriate, loading of the cation exchanger with the inert solvent desired for the treatment with the cation exchanger,
in step d1) the alkoxylate solution being removed from the cation exchanger by forcing it out therefrom with an inert gas.

2. The process according to claim 1, wherein the removal of the solvent is effected in two steps, wherein firstly
c1) the main amount of the solvent is removed in order to obtain an alkoxylate solution depleted of solvent and then
c2) the remaining amount of the solvent is removed from the alkoxylate solution depleted of the solvent, in order to obtain an alkoxylate comprising less than 5 ppm of alkali metal ions and less than 1000 ppm of solvent.

3. The process according to claim 2, wherein the solvent is distilled off in step c1) and/or the remaining amount of the solvent is removed by stripping with inert gas in step c2).

4. The process according to any of claims 1 to 3, wherein the alkoxylate is an adduct of ethylene oxide and/or propylene oxide and/or butylene oxide with at least one C₁-C₅₀-alkanol and/or at least one (C₁-C₅₀-alkyl)phenol.

5. The process according to any of claims 1 to 4, wherein the alkali metal ions to be separated off are potassium ions.

6. The process according to any of claims 1 to 5, wherein the solvent used for diluting the alkoxylate and/or in the regeneration of the cation exchanger is a C₁-C₄-alkyl alcohol, preferably methanol.

7. The process according to any of claims 1 to 6, wherein, in step b), an alkoxylate solution having an alkali metal content of not more than 1 ppm is obtained.

## Revendications

1. Procédé de séparation d'ions de métal alcalin à partir d'alcoolates contenant des ions de métal alcalin, comprenant :
a) une dilution de l'alcoolate contenant du métal alcalin par un solvant inerte,
b) un traitement de la solution de l'alcoolate contenant du métal alcalin par un échangeur de cations, pour obtenir une solution de l'alcoolate contenant moins de 5 ppm d'ions de métal alcalin,
c) une élimination du solvant à partir de la solution de l'alcoolate sensiblement exempte de métal alcalin, pour obtenir un alcoolate contenant moins de 5 ppm d'ions de métal alcalin et moins de 1000 ppm de solvant,
le procédé englobant une régénération de l'échangeur de cations, la régénération comportant les étapes suivantes :
d1) une élimination de la solution d'alcoolate à partir de l'échangeur de cations et un lavage de l'échangeur de cations avec le solvant inerte,
d2) éventuellement un lavage de l'échangeur de cations avec de l'eau désalinisée,
d3) une régénération de la résine échangeuse de cations avec un acide,
d4) un lavage à neutralité de la résine échangeuse de cations avec de l'eau désalinisée,
d5) une extraction par lavage de l'eau située dans la résine échangeuse d'ions à l'aide d'un solvant inerte, et
d6) éventuellement un chargement de l'échangeur de cations avec le solvant inerte souhaité pour le traitement avec l'échangeur de cations,
la solution d'alcoolate étant, dans l'étape d1), éliminée de l'échangeur de cations en la comprimant hors de celui-ci à l'aide d'un gaz inerte.

2. Procédé suivant la revendication 1, **caractérisé en ce que** l'élimination du solvant a lieu en deux étapes, tout d'abord
c1) la quantité principale du solvant étant éliminée pour obtenir une solution de l'alcoolate appauvrie en solvant, et ensuite
c2) la quantité résiduaire du solvant étant éliminée de la solution de l'alcoolate appauvrie en solvant pour obtenir un alcoolate contenant moins de 5 ppm d'ions de métal alcalin et moins de 1000 ppm de solvant.

3. Procédé suivant la revendication 2, **caractérisé en ce que** le solvant est séparé par distillation dans l'étape c1) et/ou la quantité résiduaire du solvant est éliminée dans l'étape c2) par stripage avec du gaz inerte.

4. Procédé suivant l'une des revendications 1 à 3, **caractérisé en ce que** l'alcoolate est un produit d'addition d'oxyde d'éthylène et/ou d'oxyde de propylène et/ou d'oxyde de butylène sur au moins un alcanol en C₁-C₅₀ et/ou au moins un (C₁-C₅₀-alkyle) -phénol.

5. Procédé suivant l'une des revendications 1 à 4, **caractérisé en ce que** les ions de métal alcalin à séparer sont des ions de potassium.

6. Procédé suivant l'une des revendications 1 à 5, **caractérisé en ce que** le solvant utilisé pour diluer l'alcoolate et/ou lors de la régénération de l'échangeur de cations est un alcool alkylique en C₁-C₄, de préférence du méthanol.

7. Procédé suivant l'une des revendications 1 à 6, **caractérisé en ce que**, dans l'étape b), on obtient une solution d'alcoolate ayant une teneur en métal alcalin qui n'est pas supérieure à 1 ppm.
